# EUROPEAN PATENT APPLICATION

(11) **EP 4 378 992 A1**
(43) Date of publication of application: **05.06.2024**
(21) Application number: 22849136.1
(22) Date of filing: 29.06.2022
(51) Int. Cl.: C08L 9/02, B32B 1/08, B32B 15/06, B32B 25/14, C08K 3/04, C08K 3/06, C08K 3/36, C08K 5/3415, C08K 5/435, C08K 5/44, F16L 11/10

(54) **RUBBER COMPOSITION FOR HOSE INNER TUBES, LAMINATE, AND HOSE**

(30) Priority: 27.07.2021 JP 2021122792
(71) Applicant: BRIDGESTONE CORPORATION, Chuo-ku Tokyo 104-8340 (JP)
(72) Inventor: UEMURA Takuya, Tokyo 104-8340 (JP); KONTANI Katsunori, Tokyo 104-8340 (JP); IIZUKA Munenori, Tokyo 104-8340 (JP); HARA Atsushi, Tokyo 104-8340 (JP)
(74) Representative: Marks & Clerk LLP
(86) International application number: PCT/JP2022/026053
(87) International publication number: WO 2023/008067

(57) **Abstract**

Provided is a rubber composition for a hose inner tube that can achieve excellent inner tube peeling resistance, even when cobalt compounds are not present or are contained in small amounts. To this end, a rubber composition for a hose inner tube of the present disclosure includes a rubber component A) containing acrylonitrile butadiene rubber, sulfur B), a sulfenamide vulcanization accelerator C), and a bismaleimide compound D) represented by general formula (I), and further includes a cobalt compound E) as an optional component.

## Description

### TECHNICAL FIELD

The present disclosure relates to a rubber composition for a hose inner tube, a laminated body, and a hose.

### BACKGROUND

Acrylonitrile butadiene rubber (NBR), which has excellent oil resistance and heat resistance, is generally used as a material for the inner tube rubber of hydraulic hoses and the like. Acrylonitrile butadiene rubber (NBR) is a highly polar polymer component and plays a role in ensuring oil resistance, which is required as an important characteristic of inner tube rubber for hydraulic hoses. With regard to rubber compositions containing such NBR, Patent Literature (PTL) 1, for example, discloses technology for optimizing the weight-average molecular weight and content of acrylonitrile butadiene rubber (NBR) for the purpose of improving heat resistance, oil resistance, and crimping resistance.

In addition, hoses and other rubber products are configured by compound materials with metal reinforcing material, such as wires, due to their required pressure resistance characteristics. In particular, since the metal reinforcing material has a high reinforcing effect in hoses such as hydraulic hoses, a highly stable adhesiveness (inner tube peeling resistance) that suppresses peeling between the metal reinforcing material and the rubber member is required to ensure higher product reliability.

A method for simultaneously bonding rubber and metal, i.e., a direct vulcanization adhesion method, is known as a method for adhering the above-described metal reinforcing material and rubber member. In this direct vulcanization adhesion method, a sulfenamide vulcanization accelerator that delays the vulcanization reaction is useful in simultaneously vulcanizing the rubber and bonding with the metal.

Examples of commercially available vulcanization accelerators that best delay the vulcanization reaction include N,N'-dicyclohexyl-2-benzothiazolylsulfenamide. In addition, in cases where a delay is required, sulfenamide vulcanization accelerators are used in combination with a vulcanization retarder such as N-(cyclohexylthio)phthalimide. For example, PTL 2 discloses technology for including a specific sulfenamide vulcanization accelerator in a rubber composition.

In addition to the above-described optimization of vulcanization accelerators, technology for blending cobalt chloride into rubber compositions is known as technology for enhancing the inner tube peeling resistance of rubber members. The cobalt chloride acts as an adhesion promoter to enhance the inner tube peeling resistance of rubber members.

However, in recent years, there has been an increasing demand for environmentally friendly materials, and demand exists for the development of technology that can improve the inner tube peeling resistance without using cobalt chloride.

### CITATION LIST

### Patent Literature

PTL 1: WO 2018/096875 A1
PTL 2: JP 2011-1524 A

### SUMMARY

### (Technical Problem)

Therefore, the aim of the present disclosure is to provide a rubber composition for a hose inner tube that can achieve excellent inner tube peeling resistance even when cobalt compounds are not present or are contained in small amounts.

Another aim of the present disclosure is to provide a laminated body and a hose with excellent inner tube peeling resistance even when cobalt compounds are not present or are contained in small amounts.

### (Solution to Problem)

The primary features of the present disclosure to solve the aforementioned problems are as follows.

A rubber composition for a hose inner tube of the present disclosure is a rubber composition for the inner tube of a hose and includes:
a rubber component A) containing acrylonitrile butadiene rubber;
sulfur B);
a sulfenamide vulcanization accelerator C); and
a bismaleimide compound represented by the following general formula (I), 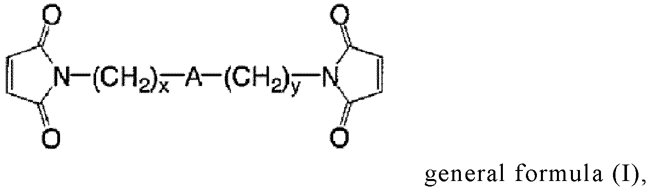 where A represents a C6-18 divalent aromatic group or a C7-24 divalent alkyl aromatic group, and x and y each independently represent an integer from 0 to 3,
the rubber composition for a hose inner tube further including a cobalt compound E) as an optional component, wherein a content of the cobalt compound is 0.1 mass% or less, in terms of cobalt content, of the rubber composition for a hose inner tube overall, and
wherein a content of the sulfenamide vulcanization accelerator C) is 1 part by mass or more per 100 parts by mass of the rubber component A).

The aforementioned configuration can achieve excellent inner tube peeling resistance even when cobalt compounds are not present or are contained in small amounts.

A laminated body of the present disclosure includes a layer composed of a vulcanizate of the above-described rubber composition for a hose inner tube of the present disclosure, and a brass-plated wire.

The aforementioned configuration can provide excellent inner tube peeling resistance even when cobalt compounds are not present or are contained in small amounts.

A hose according to the present disclosure includes at least a laminated body according to the present disclosure disposed on an inner side in a hose radial direction and an outer rubber layer disposed on an outer side in the hose radial direction.

The aforementioned configuration can provide excellent inner tube peeling resistance even when cobalt compounds are not present or are contained in small amounts.

### (Advantageous Effect)

According to the present disclosure, a rubber composition for a hose inner tube that can achieve excellent inner tube peeling resistance while having good rubber properties even when cobalt compounds are not present or are contained in small amounts can be provided.

Furthermore, according to the present disclosure, a laminated body and a hose with excellent inner tube peeling resistance while having good rubber properties even when cobalt compounds are not present or are contained in small amounts can be provided.

### BRIEF DESCRIPTION OF THE DRAWINGS

In the accompanying drawings:

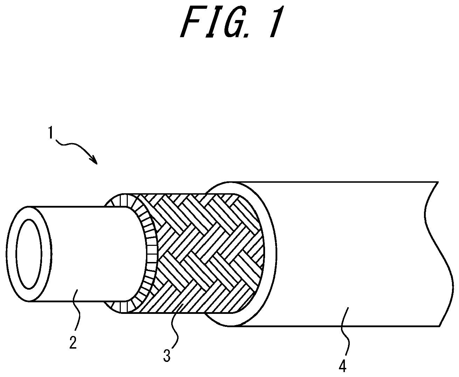

FIG. 1 is a perspective diagram illustrating the laminated structure of a hydraulic hose according to an embodiment using the rubber composition for a hose inner tube of the present disclosure.

### DETAILED DESCRIPTION

Embodiments of the present disclosure are now described. The following description is intended to illustrate the present disclosure and does not limit the present disclosure in any way. In addition, two or more embodiments may be combined freely in the present disclosure.

### <Rubber Composition for Hose Inner Tube>

A rubber composition for a hose inner tube of the present disclosure is a rubber composition to be used in the inner tube of a hose (rubber composition for a hose inner tube) and includes:
a rubber component A) containing acrylonitrile butadiene rubber;
sulfur B);
a sulfenamide vulcanization accelerator C); and
a bismaleimide compound D) represented by the following general formula (I), 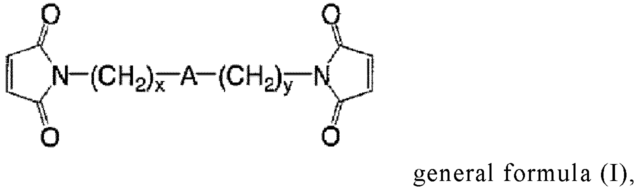 where A represents a C6-18 divalent aromatic group or a C7-24 divalent alkyl aromatic group, and x and y each independently represent an integer from 0 to 3.

In the present disclosure, a rubber component A) containing acrylonitrile butadiene rubber, sulfur B), and a sulfenamide vulcanization accelerator C) are included, together with a particular amount of a bismaleimide compound D), in a rubber composition for an inner tube to be bonded to a metal member such as a brass-plated wire, thereby greatly enhancing the inner tube peeling resistance through a synergistic effect among these components.

The components configuring the rubber composition for a hose inner tube in the present disclosure are described below.

### (Rubber Component)

The rubber composition for a hose inner tube in the present disclosure includes the rubber component A).

Here, acrylonitrile butadiene rubber (NBR) is included for the rubber component A). By including acrylonitrile butadiene rubber as the main component, physical properties such as oil resistance and cold resistance can be well maintained.

Regarding the acrylonitrile butadiene rubber, from the perspective of improving the inner tube peeling resistance and oil resistance and ensuring heat resistance and durability under high pressure, the content ratio in the rubber component is preferably 70 mass% or more, more preferably 80 mass% or more, particularly preferably 90 mass% or more, and most preferably 100 mass% or more.

The acrylonitrile butadiene rubber preferably contains two or more types of NBR. In this case, oil resistance and cold resistance properties can be enhanced in a well-balanced manner.

In a case of containing two or more types of NBR, the acrylonitrile butadiene rubber preferably contains so-called medium-high acrylonitrile butadiene rubber with an acrylonitrile content (AN content) of 30 mass% to 40 mass%, so-called medium acrylonitrile butadiene rubber with an acrylonitrile content (AN content) of 20 mass% to 30 mass%, and so-called low acrylonitrile butadiene rubber with an acrylonitrile content (AN content) of 20% or less. The content ratios of these rubbers per 100 parts by mass of the rubber component A) are more preferably 10 to 50 parts by mass for the medium-high acrylonitrile butadiene rubber, 30 to 70 parts by mass for the medium acrylonitrile butadiene rubber, and 0 to 40 parts by mass for the low acrylonitrile butadiene rubber.

Furthermore, the acrylonitrile content (AN content) in the rubber component A) is preferably in a range of 25 mass% to 32 mass%, particularly preferably in a range of 26 mass% to 30 mass%. If the AN content exceeds 32 mass%, the cold resistance deteriorates, whereas if the AN content is too low, below 25 mass%, the oil resistance degrades. When two or more NBRs with different AN contents are mixed, the average value of their AN content is set to satisfy the aforementioned numerical ranges.

Furthermore, regarding the acrylonitrile butadiene rubber, from the perspective of further increasing the heat resistance, two or more types of acrylonitrile butadiene rubber are preferably used, with the average of the weight-average molecular weights (Mw) of these NBR components being 280,000 or more, more preferably 290,000 or more, even more preferably 300,000 or more, and most preferably 310,000 or more. The upper limit of the average of the weight-average molecular weights (Mw) of the acrylonitrile butadiene rubber is preferably 380,000 or less and more preferably 350,000 or less. If the aforementioned average is too large, processability for rubber kneading operations and the like may be inferior.

The rubber component A) can also include rubber components other than the above-described acrylonitrile butadiene rubber (other rubber components).

As the other rubber components, for example, natural rubber (NR), isoprene rubber (IR), butadiene rubber (BR), styrene butadiene rubber (SBR), styrene isoprene butadiene rubber (SIBR), ethylene propylene diene rubber (EPDM), chloroprene rubber (CR), butyl rubber (IIR), and their modified derivatives can be used. These other rubber components may be used singly or in combination of two or more types.

### (Sulfur)

The rubber composition for a hose inner tube of the present disclosure includes sulfur B) as a vulcanizing agent in addition to the above-described rubber component A).

While not particularly limited, the content thereof per 100 parts by mass of the rubber component is preferably 1.0 to 7.0 parts by mass, more preferably 2.0 to 5.0 parts by mass, and particularly preferably 2.3 to 3.0 parts by mass. If the sulfur content is 1.0 parts by mass or more per 100 parts by mass of the rubber component, sufficient vulcanization can be performed, and if the sulfur content is 7.0 parts by mass or less per 100 parts by mass of the rubber component, the degradation in the aging performance of the rubber can be suppressed. If the content is 2.3 to 3.0 parts by mass per 100 parts by mass of the rubber component, better inner tube peeling resistance can be achieved without degradation of other physical properties.

### (Vulcanization Accelerator)

The rubber composition for a hose inner tube of the present disclosure includes the sulfenamide vulcanization accelerator C) in addition to the above-described rubber component A) and sulfur B).

The inclusion of the vulcanization accelerator enables the vulcanization of rubber and bonding with metal to take place simultaneously, increasing the adhesiveness between the rubber and the metal and improving the inner tube peeling resistance. Furthermore, by inclusion of the sulfenamide vulcanization accelerator C) in the present disclosure, the vulcanization reaction can be delayed, and the vulcanization of the rubber and bonding with the metal are effectively carried out, thereby achieving better inner tube peeling resistance.

The type of the sulfenamide vulcanization accelerator C) is not particularly limited, but examples include N-cyclohexyl-2-benzothiazolylsulfenamide (CZ), N-t-butyl-2-benzothiazolylsulfenamide (NS), N-methyl-N-t-butylbenzothiazole-2-sulfenamide (BMBS), N-ethyl-N-t-butylbenzothiazole-2-sulfenamide (BEBS), N-n-propyl-N-t-butylbenzothiazole-2-sulfenamide, N-n-butyl-N-t-butylbenzothiazole-2-sulfenamide (BBBS), N-methyl-N-isoamylbenzothiazole-2-sulfenamide, N-ethyl-N-isoamylbenzothiazole-2-sulfenamide, N-n-propyl-N-isoamylbenzothiazole-2-sulfenamide, N-n-butyl-N-isoamylbenzothiazole-2-sulfenamide, N-methyl-N-tert-amylbenzothiazole-2-sulfenamide, N-ethyl-N-tert-amylbenzothiazole-2-sulfenamide, N-n-propyl-N-tert-amylbenzothiazole-2-sulfenamide, N-n-butyl-N-tert-amylbenzothiazole-2-sulfenamide, N-methyl-N-tert-heptylbenzothiazole-2-sulfenamide, N-ethyl-N-tert-heptylbenzothiazole-2-sulfenamide, N-n-propyl-N-tert-heptylbenzothiazole-2-sulfenamide, N-n-butyl-N-tert-heptylbenzothiazole-2-sulfenamide, N-methyl-N-t-butyl-4-methylbenzothiazole-2-sulfenamide, N-methyl-N-t-butyl-4,6-dimethoxybenzothiazole-2-sulfenamide, N-ethyl-N-t-butyl-4-methylbenzothiazole-2-sulfenamide, N-ethyl-N-t-butyl-4,6-dimethoxybenzothiazole-2-sulfenamide, N-n-propyl-N-t-butyl-4-methylbenzothiazole-2-sulfenamide, N-n-propyl-N-t-butyl-4,6-dimethoxybenzothiazole-2-sulfenamide, N-n-butyl-N-t-butyl-4-methylbenzothiazole-2-sulfenamide, and N-n-butyl-N-t-butyl-4,6-dimethoxybenzothiazole-2-sulfenamide. These may be used singly, or a mixture of two or more types may be used.

Among these, from the perspective of achieving better inner tube peeling resistance, at least one type from among N-cyclohexyl-2-benzothiazolylsulfenamide (CZ) and N-t-butyl-2-benzothiazolylsulfenamide (NS) is preferably used as the sulfenamide vulcanization accelerator.

The amount of the sulfenamide vulcanization accelerator C) is not particularly limited, but from the perspective of not inhibiting the progress of vulcanization and more reliably ensuring the vulcanization reaction, the content is preferably 1 part by mass or more, more preferably 1.2 parts by mass or more, per 100 parts by mass of the rubber component A).

On the other hand, from the perspective of more reliably suppressing the rate of vulcanization, the content of the sulfenamide vulcanization accelerator C) is preferably 3.0 parts by mass or less, more preferably 2.0 parts by mass or less, and even more preferably 2.0 parts by mass or less per 100 parts by mass of the rubber component A).

The rubber composition for a hose inner tube of the present disclosure needs to include the sulfenamide vulcanization accelerator C), but other vulcanization accelerators may be included to the extent that they do not interfere with the effects of the present disclosure. Examples of other vulcanization accelerators include dithiocarbamate, xanthogenate, guanidine, thiourea, aldehyde-ammonia, and aldehyde-amine vulcanization accelerators.

### (Bismaleimide Compound)

The rubber composition for a hose inner tube of the present disclosure includes a bismaleimide compound D) represented by general formula (I) in addition to the above-described rubber component A), sulfur B), and sulfenamide vulcanization accelerator C).

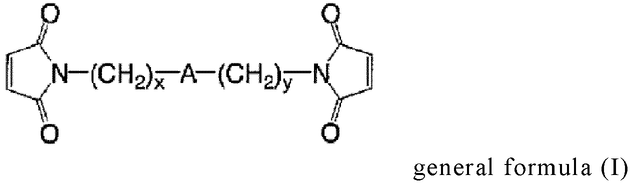

The bismaleimide compound represented by general formula (I) can be included in the rubber composition for a hose inner tube of the present disclosure to enhance adhesiveness and improve the inner tube peeling resistance.

In general formula (I), A represents a C6-18 divalent aromatic group or a C7-24 divalent alkyl aromatic group, and x and y each independently represent an integer from 0 to 3.

While x and y are both integers from 0 to 3 in the bismaleimide compound represented by general formula (I), when x or y is 4 or more, the molecular weight becomes too large, which is inconvenient because the desired improvement in inner tube peeling resistance cannot be achieved relative to the content.

Specific examples of the bismaleimide compound D) represented by general formula (I) include N,N'-1,2-phenylenedimaleimide, N,N'-1,3-phenylenedimaleimide, N,N'-1,4-phenylenedimaleimide, N,N'-(4,4'-diphenylmethane)bismaleimide, 2,2-bis[4-(4-maleimidophenoxy)phenyl]propane, and bis(3-ethyl-5-methyl-4-maleimidophenyl]methane. One or more types of these bismaleimide compounds can be combined.

Among these bismaleimide compounds, N,N'-1,2-phenylenedimaleimide, N,N'-1,3-phenylenedimaleimide, or N,N'-1,4-phenylenedimaleimide is preferably used, and at least N,N'-(4,4'-diphenylmethane)bismaleimide is more preferably included.

In the rubber composition for a hose inner tube of the present disclosure, the content of the bismaleimide compound D) is preferably 0.5 parts by mass or more per 100 parts by mass of the rubber component. The reason is that setting the content of the bismaleimide compound to 0.5 parts by mass or more per 100 parts by mass of the rubber component increases the adhesiveness of the rubber composition and further enhances the inner tube peeling resistance. From the same perspective, the content of the bismaleimide compound is more preferably 1 part by mass or more per 100 parts by mass of the rubber component.

From the perspective of more reliably suppressing degradation of the inner tube peeling resistance due to excessive hardening, the content of the bismaleimide compound is preferably 5 parts by mass or less, more preferably 4 parts by mass or less, per 100 parts by mass of the rubber component.

### (Cobalt Compound)

Furthermore, the rubber composition for a hose inner tube of the present disclosure can contain a cobalt compound E) as an optional component. The inclusion of the cobalt compound E) can improve the inner tube peeling resistance.

However, from the perspective of consideration for the environment, the content of the cobalt compound E) needs to be 0.1 mass% or less, in terms of cobalt content, of the rubber composition for a hose inner tube overall, and is preferably 0.05 mass% or less, and particularly preferably 0% (i.e., not present).

The cobalt compound E) refers to a compound containing cobalt, such as cobalt metal, cobalt oxide, cobalt chloride, cobalt sulfate, cobalt nitrate, cobalt phosphate, cobalt chromate, and cobalt organic acid.

### (Filler)

In addition to the essential and optional components described above, the rubber composition for a hose inner tube of the present disclosure preferably contains silica as a filler.

The inclusion of silica enhances the adhesiveness of the rubber composition for a hose inner tube and improves the inner tube peeling resistance.

No particular limitation is placed on the type of silica. For example, wet silica (hydrous silicate), dry silica (anhydrous silicate), calcium silicate, aluminum silicate, and the like can be used. Among those, wet silica is preferably used.

The BET specific surface area (measured according to ISO5794/1) of the wet silica is preferably around 100 to 300 m²/g. Silica with a BET specific surface area in this range can further enhance the inner tube peeling resistance without reducing productivity. One type of silica may be used, or two or more types may be used in combination.

The content of the silica is preferably less than 20 parts by mass per 100 parts by mass of the rubber component A). When the content of the silica is less than 20 parts by mass per 100 parts by mass of the rubber component, an increase in viscosity of the unvulcanized rubber and a decrease in productivity can be prevented. From the same perspective, the content of the silica is preferably 15 parts by mass or less, more preferably 10 parts by mass or less, per 100 parts by mass of the rubber component A).

From the perspective of more reliably improving the inner tube peeling resistance, the content of the silica is preferably 2 parts by mass or more, more preferably 3 parts by mass or more, and even more preferably 5 parts by mass or more, per 100 parts by mass of the rubber component A).

The filler also preferably further contains carbon black. This is because the inner tube peeling resistance of the rubber composition for a hose inner tube can be further improved, and the durability can also be improved.

Although there is no particular limit on the content of the carbon black, the content is preferably less than 120 parts by mass per 100 parts by mass of the rubber component from the perspective of enhancing the inner tube peeling resistance without decreasing productivity. In addition, the content of the carbon black is preferably more than 110 parts by mass per 100 parts by mass of the rubber component from the perspective of more reliably enhancing the inner tube peeling resistance.

No particular limitation is placed on the type of carbon black. For example, carbon black of grades such as FEF, GPF, SRF, HAF, ISAF, and SAF can be used. Among these, the carbon black preferably contains at least one type of carbon black selected from FEF, GPF, and SRF and more preferably contains at least SRF carbon black. This more reliably achieves improvement in the inner tube peeling resistance.

In addition to the above-described silica and carbon black, the filler can include inorganic fillers such as aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate.

### (N-phenyl-N-(trichloromethylthio)benzenesulfonamide)

In addition to the essential and optional components mentioned above, the rubber composition for a hose inner tube of the present disclosure preferably contains N-phenyl-N-(trichloromethylthio)benzenesulfonamide. The inclusion of the N-phenyl-N-(trichloromethylthio)benzenesulfonamide promotes the vulcanization reaction while enabling adjustment of the timing of the vulcanization reaction, thereby further improving the inner tube peeling resistance.

While the N-phenyl-N-(trichloromethylthio)benzenesulfonamide can produce a vulcanization retarding effect, it is not included among vulcanization retarders in the present disclosure.

The N-phenyl-N-(trichloromethylthio)benzenesulfonamide has the following chemical structure.

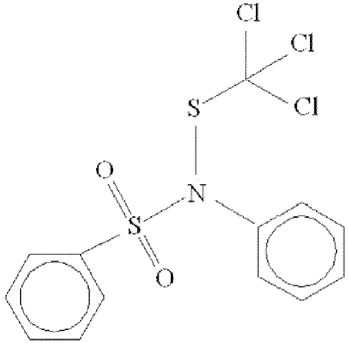

Commercial products such as "Vulkalent E/C" (manufactured by LANXESS) can be used as the N-phenyl-N-(trichloromethylthio)benzenesulfonamide.

The content of the N-phenyl-N-(trichloromethylthio)benzenesulfonamide is not particularly limited, but from the perspective of achieving better inner tube peeling resistance, the content is preferably 0.1 parts by mass or more, more preferably 0.2 parts by mass or more, per 100 parts by mass of the rubber component A). The content of the N-phenyl-N-(trichloromethylthio)benzenesulfonamide is preferably 4 parts by mass or less, more preferably 2 parts by mass or less, per 100 parts by mass of the rubber component A) from the perspective of efficient vulcanization progress.

### (Other Components)

The rubber composition for a hose inner tube of the present disclosure may, as necessary, include components (other components) other than the above-described essential components, optional components, and suitable components. Such other components include, for example, vulcanization retarders, vulcanization accelerators, age resistors, plasticizers, petroleum resins, waxes, antioxidants, oils, lubricants, ultraviolet absorbing agents, dispersants, compatibilizing agents, co-crosslinking agents, and homogenizing agents.

Among the aforementioned other components, the rubber composition for a hose inner tube of the present disclosure preferably further contains a vulcanization retarder from the perspective of achieving better inner tube peeling resistance. The action of the vulcanization retarder more reliably achieves vulcanization of the rubber and bonding with the metal, thereby enhancing the adhesiveness between the rubber and the metal.

The content of the vulcanization retarder is not particularly limited. For example, from the perspective of more reliably enhancing the inner tube peeling resistance without adversely affecting productivity, the content of the vulcanization retarder is preferably set to 1.5 parts by mass or less, more preferably 1.3 parts by mass or less, per 100 parts by mass of the rubber component.

Examples of vulcanization retarders include phthalic anhydride and N-(cyclohexylthio)phthalimide.

The rubber composition for a hose inner tube of the present disclosure can be obtained by, for example, mixing and kneading the above-described components with a Banbury mixer, kneader, or the like.

### <Laminated Body>

A laminated body of the present disclosure includes a layer composed of a vulcanizate of the above-described rubber composition for a hose inner tube of the present disclosure, and a brass-plated wire.

Inclusion of a layer composed of a vulcanizate of the rubber composition for a hose inner tube of the present disclosure can achieve excellent inner tube peeling resistance even when cobalt compounds are not used or are contained in small amounts.

The rubber composition for a hose inner tube is as described above.

The conditions for vulcanizing the rubber composition for a hose inner tube are not particularly limited and can be adjusted according to the required performance. For example, a layer composed of the vulcanizate can be obtained by vulcanizing at 100°C to 200°C for 10 to 100 minutes.

The brass-plated wire that forms part of the laminated body is not particularly limited and can be selected according to the required performance.

Furthermore, in the laminated body of the present disclosure, the brass-plated wire can be braided and layered. When the laminated body of the present disclosure is used in a hose, this layer composed of braided brass-plated wires forms a reinforcement layer. The method of braiding the brass-plated wires is not particularly limited and can be selected according to the application of the laminated body. For example, the brass-plated wires can be braided in a spiral or braid shape.

Furthermore, in the laminated body of the present disclosure, the brass-plated wire can be braided in combination with organic fibers. In this case, aramid fibers, polyester fibers, polyarylate fibers, nylon fibers, vinylon fibers, polyethylene terephthalate fibers, polyethylene naphthalate fibers, ultra-high molecular weight polyethylene fibers, carbon-based fibers, and the like can be used as the organic fibers.

### <Hose>

A hose according to the present disclosure includes at least a laminated body according to the present disclosure disposed on an inner side in a hose radial direction and an outer rubber layer disposed on an outer side in the hose radial direction. As another component, a protective layer, for example, can be disposed on the inner side in the hose radial direction from the laminated body of the present disclosure. The protective layer can also be disposed on the outer side in the hose radial direction from the outer rubber layer. In addition, a plurality of optional rubber layers and reinforcement layers can be disposed between the laminated body of the present disclosure and the outer rubber layer.

Disposing the laminated body of the present disclosure on the inner side in the hose radial direction can achieve excellent inner tube peeling resistance and productivity even when cobalt compounds are not used or are contained in small amounts.

As illustrated in FIG. 1, for example, the hose of the present disclosure can be a hydraulic hose 1 formed by sequentially layering a rubber inner surface rubber layer 2 (inner tube rubber) filled with hydraulic oil, a reinforcement layer 3 to withstand the pressure of the hydraulic oil, and an outer surface rubber layer 4 (outer cover rubber) that prevents the reinforcement layer 3 and inner surface rubber layer 2 from being damaged.

In this case, in the above-described laminated body of the present disclosure, the vulcanizate of the rubber composition for a hose inner tube constitutes the inner surface rubber layer 2, and the brass-plated wire constitutes the reinforcement layer 3.

The hydraulic hose 1 can be manufactured by the following method.

First, the rubber composition for a hose inner tube of the present disclosure is extruded onto the outer side of a core (mandrel) having a diameter similar to the inner diameter of the hose to coat the mandrel and form an inner surface rubber layer (inner tube rubber) 2 (inner tube extrusion step). Next, a predetermined number of brass-plated wires is braided to laminate a reinforcement layer 3 on the outer side of the inner surface rubber layer 2 formed by the inner tube extrusion step (braiding step), and the rubber composition that will become the outer cover of the hose is formed by extrusion on the outer side of the reinforcement layer 3 to form an outer surface rubber layer 4 (outer cover rubber) (outer cover extrusion step). Furthermore, the outer side of the outer surface rubber layer 4 formed in the outer cover extrusion step is coated with resin (resin mold coating step), and the result is vulcanized under normal conditions (vulcanization step). After the vulcanization, the coating resin is peeled away (resin mold peeling step) and the mandrel is removed (mandrel removal step) to yield the hydraulic hose 1 having the reinforcement layer 3 between the inner tube rubber 2 and the outer cover rubber 4.

The structure of the hydraulic hose 1 can be a three-layer structure with the inner tube rubber 2, reinforcement layer 3, and outer cover rubber 4 sequentially layered from the inner side as described above. While not illustrated, if further strength or the like is required, a five-layer structure with two reinforcement layers and an intermediate layer (intermediate rubber) between these two reinforcement layers may be adopted. These structures can be set according to the required characteristics and the like of the hose.

Examples of the intermediate rubber include ethylene-propylene copolymer rubber (EPM), ethylene-propylene-diene ternary copolymer rubber (EPDM), acrylic rubber (ACM), chloroprene rubber (CR), chlorosulfonated polyethylene rubber, hydrin rubber, styrene-butadiene copolymer rubber (SBR), acrylonitrile-butadiene copolymer rubber (NBR), isobutylene-isoprene copolymer rubber (IIR), natural rubber (NR), isoprene rubber (IR), butadiene rubber (BR), urethane rubber, silicone rubber, and fluorinated rubber. These rubber components may be used singly, or two or more types may be freely blended.

Furthermore, in consideration of material strength, durability, and extrudability, known rubber compounding agents and rubber fillers commonly used in the rubber industry can be used in the intermediate rubber to the extent that they do not hinder the objective of the present disclosure. Examples of such compounding agents and fillers, which can be used as needed, include inorganic fillers such as carbon black, silica, and calcium carbonate; process oils, plasticizers, and softeners; vulcanizing agents such as sulfur; vulcanizing co-agents such as zinc oxide and stearic acid; vulcanization accelerators such as dibenzothiazyl disulfide; age resistors such as N-cyclohexyl-2-benzothiazyl-sulfenamide and N-oxydiethylene-benzothiazyl-sulfenamide; antioxidants; and additives such as antioxidants and antiozonants. These compounding agents and fillers may be used alone, or two or more types may be used in combination.

The outer cover rubber can be configured by a layer made of thermoplastic resin, for example, as used in conventional hydraulic hoses, or the outer cover rubber can be configured by the aforementioned various rubbers. The outer rubber layer protects the fibers forming the reinforcement layer and prevents external damage to the reinforcement layer, while also being preferable in terms of appearance.

The compounds described in the present disclosure may be partially or entirely derived from fossil resources, biological resources such as plant resources, or recycled resources such as used tires. The compounds may also be derived from a mixture of two or more of fossil resources, biological resources, and recycled resources.

### EXAMPLES

The following provides further illustration through examples, but these examples are only provided for illustration and in no way limit the present disclosure. In the Examples, the amounts refer to parts by mass unless otherwise specified.

### (Samples 1 to 21)

Samples of the rubber composition for a hose inner tube were prepared according to the formulations listed in Table 1 by kneading using an ordinary Banbury mixer. The content of each component in Table 1 is listed as an amount (parts by mass) per 100 parts by mass of the rubber component.

### (Evaluation)

The following evaluations were then performed on the obtained samples of the rubber composition. Table 1 lists the evaluation results.

### (1) Mooney Viscosity

The Mooney viscosity of each sample of the rubber composition for a hose inner tube was measured in accordance with JIS K 6300-1 (2001), "Mooney viscosity, Mooney scorch time".

The results of the measured Mooney viscosity are listed in Table 1. A smaller value indicates a smaller unvulcanized viscosity, and a larger value indicates increased hardness. The results thus indicate that no productivity problems occur between 70 and 130, with good productivity particularly between 77 and 104.

### (2) Elongation at Break (Eb)

Each sample of the rubber composition for a hose inner tube was vulcanized at 150°C for 60 minutes to produce vulcanized rubber. Each piece of vulcanized rubber was processed into a dumbbell-shaped No. 3 test piece, and the elongation at break (Eb) was measured using a tensile test apparatus (Shimadzu Corporation). Specifically, the test pieces were pulled at a speed of 500 mm/min at 25°C, the length at which the test pieces broke was measured, and the length (%) relative to the length before pulling (100%) was calculated.

The results of the measurement of the elongation at break (Eb) are listed in Table 1, with larger values indicating better elongation at break.

### (3) Tensile Strength (Tb)

Each sample of the rubber composition for a hose inner tube was vulcanized at 150°C for 60 minutes to produce vulcanized rubber. Each piece of vulcanized rubber was processed into a dumbbell-shaped No. 3 test piece, and the tensile Strength (Tb) was measured using a tensile test apparatus (Shimadzu Corporation). Specifically, the test pieces were pulled at a speed of 500 mm/min at 25°C, and the tensile force recorded when each test piece was cut was divided by the cross-sectional area of the test piece before testing.

The results of the measurement of the tensile Strength (Tb) are listed in Table 1, with larger values indicating better tensile strength.

### (4) 100% modulus

Each sample of the rubber composition for a hose inner tube was vulcanized at 150°C for 60 minutes to produce vulcanized rubber. Each piece of vulcanized rubber was processed into a dumbbell-shaped No. 3 test piece, and the 100% modulus (MPa) was measured in accordance with JIS K 6251 (2010).

The results of the measurement of the 100% modulus are listed in Table 1, with larger values indicating better elastic modulus.

### (5) Compression Set (Cs)

Each sample of the rubber composition for a hose inner tube was vulcanized at 150°C for 60 minutes to produce vulcanized rubber. The compression set (Cs) of each piece of vulcanized rubber was measured according to the measurement method specified in JIS-K6301. The compression conditions were a temperature of 100°C, a compression ratio of 25%, and a compression time of 72 hours.

The results of the measurement of compression set (Cs) are listed in Table 1, with smaller values indicating better compression set and better crimping properties.

### (6) Wire Pulling Force

Each sample of the rubber composition for a hose inner tube was hot-kneaded by two rolls for testing to produce a rubber sheet, and a plurality of rubber pieces measuring 10 mm in width by 120 mm in length were cut from this rubber sheet. A brass-plated wire of *φ*0.6 mm × 100 mm plated with brass (65% Cu, 35% Zn) was sandwiched between two rubber pieces so that the total thickness was 8 mm for the upper rubber sheet and 6 mm for the lower rubber sheet. The result was vulcanized at 150°C for 60 minutes to produce test samples with a 10 mm long embedded wire. The obtained test samples were subjected to an extraction test by a method in accordance ASTM D2229, and the force required for extraction (extraction force (N)) was measured.

The higher the wire extraction force value, the greater the adhesiveness between the rubber and the wire, indicating better inner tube peeling resistance.

**[Table 1]**

| | | Composition | | | | | | | | | | | | | Evaluations | | | | | |
|---|---|---|---|---|---|---|---|---|---|---|---|---|---|---|---|---|---|---|---|---|
| | | NBR1 *1 | NBR2 *2 | NBR3 *3 | Carbon black *4 | Silica *5 | Vulcanization retarder *6 | Plasticizer *7 | Sulfur *8 | Bismaleimide compound *9 | Vulcanization accelerator CZ * 10 | Vulcanization accelerator NS *11 | Vulcanization accelerator DM *12 | N-phenyl-N-(trichloromethylthio) benzenesulfonamide *12 | Mooney viscosity | Elongation at break Eb (%) | Tensile strength Tb (Mpa) | 100% modulus (Mpa) | Compression set Cs (%) | Wire pulling force (N) |
| 1 | Example | 54 | 27 | 19 | 115 | 10 | 1 | 10 | 2.21 | 1 | 1.8 | - | - | - | 89.4 | 215 | 20.0 | 9.2 | 42.9 | 64.4 |
| 2 | Example | 54 | 27 | 19 | 110 | 10 | 1 | 10 | 2.8 | 0.5 | 1.8 | - | - | 0.5 | 82.9 | 180 | 20.6 | 9.8 | 39.7 | 87.8 |
| 3 | Example | 54 | 27 | 19 | 115 | 10 | 1 | 10 | 2.5 | 0.5 | 1.8 | - | - | 0.5 | 87.4 | 175 | 19.9 | 10.6 | 39.6 | 71.1 |
| 4 | Example | 54 | 27 | 19 | 115 | 10 | 1 | 10 | 2.5 | 1 | 1.8 | - | - | 0.5 | 89.3 | 170 | 19.6 | 11.0 | 36.1 | 96.7 |
| 5 | Example | 54 | 27 | 19 | 115 | 10 | 1 | 10 | 2.8 | 0.5 | 1.8 | - | - | 0.5 | 86.6 | 185 | 20.9 | 11.1 | 38.0 | 98.8 |
| 6 | Example | 54 | 27 | 19 | 115 | 10 | 1 | 12 | 2.8 | 1 | 1.8 | - | - | 0.5 | 81.2 | 175 | 20.3 | 11.7 | 36.8 | 111.2 |
| 7 | Example | 54 | 27 | 19 | 115 | 10 | 1 | 10 | 2.8 | 1 | 1.3 | - | - | - | 107.2 | 190 | 20.4 | 11.9 | 37.1 | 130.9 |
| 8 | Example | 54 | 27 | 19 | 115 | 10 | 1 | 10 | 2.8 | 0.3 | 1.8 | - | - | 0.5 | 85.6 | 170 | 21.1 | 12.0 | 39.1 | 90.8 |
| 9 | Example | 54 | 27 | 19 | 115 | 20 | 1 | 10 | 2.8 | 1 | 1.3 | - | - | 0.5 | 122.2 | 160 | 19.6 | 12.6 | 35.9 | 199.7 |
| 10 | Example | 54 | 27 | 19 | 115 | 10 | 1 | 10 | 2.8 | 1 | 1.8 | - | - | 0.5 | 86.2 | 155 | 20.6 | 12.6 | 37.4 | 99.7 |
| 11 | Example | 54 | 27 | 19 | 115 | 15 | 1 | 10 | 2.8 | 1 | 1.3 | - | - | 0.5 | 111.3 | 170 | 19.9 | 12.9 | 31.1 | 186.6 |
| 12 | Example | 54 | 27 | 19 | 120 | 10 | 1 | 10 | 2.5 | 1 | 1.8 | - | - | 0.5 | 90.0 | 170 | 21.0 | 13.3 | 37.7 | 86.8 |
| 13 | Example | 54 | 27 | 19 | 115 | 10 | 1 | 10 | 2.8 | 3 | 1.8 | - | - | 0.5 | 89.6 | 160 | 20.2 | 13.4 | 38.0 | 100.9 |
| 14 | Example | 54 | 27 | 19 | 115 | 10 | 1 | 10 | 2.8 | 1 | 1.3 | - | - | 0.5 | 103.4 | 170 | 20.1 | 13.7 | 30.0 | 165.1 |
| 15 | Example | 54 | 27 | 19 | 115 | 10 | 1 | 10 | 2.8 | 1 | 1.8 | - | - | 1.0 | 88.1 | 155 | 21.0 | 14.1 | 38.6 | 109.7 |
| 16 | Example | 54 | 27 | 19 | 115 | - | 1 | 10 | 2.8 | 1 | 1.3 | - | - | 0.5 | 90.6 | 130 | 18.9 | 14.6 | 28.9 | 113.9 |
| 17 | Example | 54 | 27 | 19 | 115 | 2 | 1 | 7.5 | 2.8 | 3 | - | 2.3 | - | 0.3 | 81.1 | 150 | 20.8 | 14.7 | 40.7 | 70.6 |
| 18 | Example | 54 | 27 | 19 | 115 | 5 | 1 | 10 | 2.8 | 1 | 1.3 | - | - | 0.5 | 99.3 | 160 | 20.6 | 14.8 | 28.6 | 92.1 |
| 19 | Example | 54 | 27 | 19 | 115 | 10 | 1 | 10 | 3.3 | 1 | 1.3 | - | - | 0.5 | 104.9 | 150 | 20.5 | 15.1 | 32.8 | 152.9 |
| 20 | Comparative Example | 54 | 27 | 19 | 115 | 10 | 1 | 10 | 2.21 | - | 1.8 | - | - | - | 85.2 | 180 | 18.4 | 8.9 | 40.3 | 53.8 |
| 21 | Comparative Example | 54 | 27 | 19 | 115 | - | 1 | 10 | 2.21 | - | - | - | 2.3 | - | 74.1 | 215 | 19.3 | 8.6 | 30.9 | 5.8 |

| | | | | | | | | | | | | | | | | | | | | |
|---|---|---|---|---|---|---|---|---|---|---|---|---|---|---|---|---|---|---|---|---|
| *1: Medium nitrile NBR, "Krynac^{®} 2865F" (Krynac is a registered trademark in Japan, other countries, or both) *2: Medium-high nitrile NBR, "Krynac^{®} 3370F" *3: Low nitrile NBR, "JSR N250S" manufactured by JSR Corporation *4: SRF grade carbon black, "Asahi #50" manufactured by Asahi Carbon Co., Ltd. *5: "Nipsil AQ" manufactured by Tosoh Silica Corporation *6: N-(cyclohexylthio)phthalimide ("Retarder CTP" manufactured by Toray Industries, Inc.), phthalic anhydride ("phthalic anhydride" manufactured by Kawasaki Kasei Chemicals Ltd.) *7: DOA ("DOA" manufactured by New Japan Chemical Co., Ltd.), TP-95 ("TP-95" manufactured by The HallStar Company) *8: "SULFAX^{®} 5" (SULFAX is a registered trademark in Japan, other countries, or both) manufactured by Tsurumi Chemical Industry Co., Ltd. *9: N,N'-m-phenylene bismaleimide, "BMI-3000H" manufactured by Daiwa Kasei Co., Ltd. *10: N-cyclohexyl-2-benzothiazolylsulfenamide, "Accelerator CBS" manufactured by Shandong Sunsine Chemical Co., Ltd. *11: N-t-butyl-2-benzothiazylsulfenamide, "Accelerator TBBS" manufactured by Shandong Sunsine Chemical Co., Ltd. *12: Benzothiazyl disulfide, "Nocceler DM-P" manufactured by Ouchi Shinko Chemical Industrial Co., Ltd. *13: "Vulkalent E/C" manufactured by LANXESS | | | | | | | | | | | | | | | | | | | | |

From the results in Table 1, it can be seen that for each sample in the Examples, all of the evaluation items exhibit well-balanced, excellent results. Conversely, for each sample in the Comparative Examples, at least the wire extraction force was inferior to that of the Examples, and some of the other evaluation items also exhibited inferior results as compared to the Examples.

### INDUSTRIAL APPLICABILITY

According to the present disclosure, a rubber composition for a hose inner tube that can achieve excellent inner tube peeling resistance while having good rubber properties even when cobalt compounds are not present or are contained in small amounts can be provided.

Furthermore, according to the present disclosure, a laminated body and a hose with excellent inner tube peeling resistance while having good rubber properties even when cobalt compounds are not present or are contained in small amounts can be provided.

### REFERENCE SIGNS LIST

- 1: Hydraulic hose
- 2: Inner surface rubber layer (inner tube rubber)
- 3: Reinforcement layer (brass-plated wire)
- 4: Outer surface rubber layer (outer cover rubber)

## Claims

1. A rubber composition for a hose inner tube, comprising:
a rubber component A) containing acrylonitrile butadiene rubber;
sulfur B);
a sulfenamide vulcanization accelerator C); and
a bismaleimide compound D) represented by the following general formula (I), 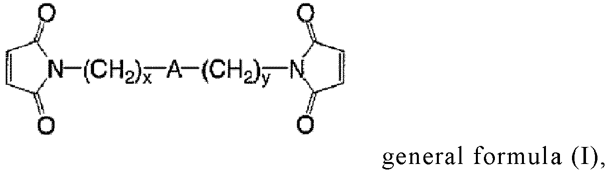
where A represents a C6-18 divalent aromatic group or a C7-24 divalent alkyl aromatic group, and x and y each independently represent an integer from 0 to 3,
the rubber composition for a hose inner tube further comprising a cobalt compound E) as an optional component, wherein a content of the cobalt compound is 0.1 mass% or less, in terms of cobalt content, of the rubber composition for a hose inner tube overall, and
wherein a content of the sulfenamide vulcanization accelerator C) is 1 part by mass or more per 100 parts by mass of the rubber component A).

2. The rubber composition for a hose inner tube according to claim 1, wherein the rubber component A) contains two or more types of acrylonitrile butadiene rubber.

3. The rubber composition for a hose inner tube according to claim 1 or 2, further comprising silica, wherein a content of the silica is less than 20 parts by mass per 100 parts by mass of the rubber component A).

4. The rubber composition for a hose inner tube according to claim 3, wherein the content of the silica is 5 parts by mass or more and 10 parts by mass or less per 100 parts by mass of the rubber component A).

5. The rubber composition for a hose inner tube according to claim 1 or 2, wherein the content of the sulfur B) is 2.3 parts by mass or more and 3 parts by mass or less per 100 parts by mass of the rubber component A).

6. The rubber composition for a hose inner tube according to claim 1 or 2, further comprising carbon black, wherein a content of the carbon black is more than 110 parts by mass and less than 120 parts by mass per 100 parts by mass of the rubber component A).

7. The rubber composition for a hose inner tube according to claim 1 or 2, further comprising N-phenyl-N-(trichloromethylthio)benzenesulfonamide, wherein a content of the N-phenyl-N-(trichloromethylthio)benzenesulfonamide is 0.1 parts by mass or more per 100 parts by mass of the rubber component A).

8. The rubber composition for a hose inner tube according to claim 1 or 2, wherein a content of the bismaleimide compound D) is 1 part by mass or more per 100 parts by mass of the rubber component A).

9. A laminated body comprising a layer composed of a vulcanizate of the rubber composition for a hose inner tube according to claim 1 or 2, and a brass-plated wire.

10. A hose comprising the laminated body according to claim 9 disposed on an inner side in a hose radial direction and an outer rubber layer disposed on an outer side in the hose radial direction.
